# EUROPÄISCHE PATENTSCHRIFT

(11) **EP 4 588 147 B1**
(45) Veröffentlichungstag und Bekanntmachung des Hinweises auf die Patenterteilung: **04.11.2026**
(21) Anmeldenummer: 23772404.2
(22) Anmeldetag: 11.09.2023
(51) Int. Cl.: H02J 3/001, H02J 3/008, H02J 13/13, H02J 3/14

(54) **ZUVERLÄSSIGES ZEITGESTEUERTES SYSTEM UND VERFAHREN ZUM ENERGIE-MANAGEMENT**
RELIABLE TIME-CONTROLLED SYSTEM AND METHOD FOR ENERGY MANAGEMENT
SYSTÈME À COMMANDE TEMPORELLE FIABLE ET PROCÉDÉ DE GESTION D'ÉNERGIE

(30) Priorität: 13.09.2022 AT 507032022
(43) Veröffentlichungstag der Anmeldung: 23.07.2025
(73) Patentinhaber: TTTech Computertechnik Aktiengesellschaft, 1040 Wien (AT)
(72) Erfinder: KOPETZ, Hermann, 9201 Krumpendorf (AT)
(74) Vertreter: Patentanwaltskanzlei Matschnig & Forsthuber OG
(86) Internationale Anmeldenummer: PCT/AT2023/060318
(87) Internationale Veröffentlichungsnummer: WO 2024/055055

(56) Entgegenhaltungen:
- EP-A1- 4 009 463
- US-A1- 2011 204 720
- US-A1- 2016 111 920
- US-A1- 2019 288 513
- US-A1- 2021 376 656

## Beschreibung

Die Erfindung betrifft ein zuverlässiges zeitgesteuertes System und ein Verfahren zum Energie-Management bei einem Endverbraucher von elektrischer Energie.

Insbesondere betrifft die Erfindung ein Energie-Management-System bei einem Energieendverbraucher, wobei das Energie-Management System aus mindestens zwei Subsystemen, einem *Energielenkungssystem* und einem *Energieoptimierungssystem* besteht und wobei das *Energielenkungssystem* über Stromleitungen mit mindestens einer Energiequelle und mindestens einem Energieverbraucher verbunden ist, und vorzugsweise an einem oder mehreren Energiespeichern angeschlossen ist, und eine zeitabhängige Verteilung der elektrischen Energie im *Normalbetrieb* entsprechend *Soll-Daten* vom *Energieoptimierungssystem* vornimmt, und wobei das *Energieoptimierungssystem* über Algorithmen verfügt, mittels derer die zeitabhängigen Soll-Daten für die Verteilung der elektrischen Energie auf der Basis des geplanten Energieverbrauchs und der vom Internet geladenen Energiepreis- und Wetterdaten berechnet werden.

Weiters betrifft die Erfindung ein Verfahren zum Energie-Management bei einem Endverbraucher mit einem Energie-Management-System.

Ein Energie-Management-System ist beispielsweise in der US 2016/111920 A1 beschrieben.

Die Umwandlung des Energiesystems von fossilen Energieträgern zu erneuerbaren Energiequellen, die primär elektrische Energie produzieren, eröffnet neue Möglichkeiten, den Energieeinsatz beim Endverbraucher optimal zu gestalten. Da das Angebot an erneuerbarer Energie-vorwiegend von Photovoltaik (PV) Anlagen und von Wind Anlagen-stark von den gegebenen Umweltbedingungen abhängt und gravierenden Schwankungen unterliegt, ist es erforderlich, die von den erneuerbaren Energie-Anlagen produzierte Energie in einem Zwischenspeicher zu speichern, um sie zum Zeitpunkt des Energiebedarf abrufen zu können. Ein solche Zwischenspeicherung kann entweder beim Endverbraucher (z.B. in einer Batterie) oder beim öffentlichen Netzbetreiber (z.B. in einem Stausee) erfolgen.

Mit der Einführung von zeitabhängigen Stromtarifen (z.B. der Tarif "Sonnenplus Smart" der KELAG ) versuchen die Netzbetreiber, die Kosten der Energiespeicherung an den Endverbraucher weiterzugeben. Es eröffnet sich beim Endverbraucher damit die Möglichkeit, durch ein intelligentes Energiemanagement Energiekosten zu sparen. Zum Beispiel kann ein Endverbraucher mit einem lokalen Energiespeicher den Energiebezug vom Stromnetz auf eine Zeit verlagern, zu der ein niedriger Stromtarif vorliegt und-insbesondere falls er über eine lokale Energiequelle, wie eine PV-Anlage verfügt- die Energielieferung an das Stromnetz auf eine Zeit verlagern, zu der ein hoher Stromtarif zu erwarten ist.

Diese Art der Energieoptimierung erfordert komplexe Computersysteme, die auf der Basis von Wetterdaten und Tarifprognosen aus dem Internet und dem geschätzten lokalen Energiebedarf eine optimale Lenkung des elektrischen Energieflusses beim Endbenutzer vornehmen. Diese komplexen dynamischen Computersysteme, die mit dem Internet verbunden sein müssen, haben eine geringere Zuverlässigkeit als einfache Systeme ohne direkte Verbindung zum Internet, die nach festgelegten statischen Regeln den Energiefluss lenken. Aspekte der Erfindung sind in den unabhängigen Ansprüchen 1 und 8 definiert.

Es ist eine Aufgabe der vorliegenden Erfindung, die Zuverlässigkeit des Energiemanagements beim Endverbraucher zu erhöhen.

Diese Aufgabe wird mit einem eingangs genannten System dadurch gelöst, dass das *Energielenkungssystem* und das *Energieoptimierungssystem* je eine unabhängige *Fault Containment Unit* bilden, und wobei eine Schnittstelle zwischen dem *Energielenkungssystem* und dem *Energieoptimierungssystem* als zeitgesteuerte Nachrichtenschnittstelle ausgebildet ist, und wobei vom *Energieoptimierungssystem* periodisch eine *definierte zeitgesteuerte Nachricht* mit den *Soll-Daten* der Energieverteilung in der folgenden Periode) an das *Energielenkungssystem* gesendet wird, und wobei vom *Energielenkungssystem* periodisch eine *definierte zeitgesteuerte Nachricht* mit den *Ist-Daten* des Energieeinsatzes in der vergangenen Periode an das *Energieoptimierungssystem* gesendet wird, und *wobei im Energielenkungssystem* ein Notfallplan mit Soll-Daten zur Energieverteilung vorhanden ist, der vom *Energielenkungssystem* verwendet wird, falls in einem festgelegten Zeitintervall keine definierte Nachricht mit Soll-Daten zur Energieverteilung vom *Energieoptimierungssystem* beim *Energielenkungssystem* eintrifft, oder wenn die empfangenen Werte der Soll-Daten nicht innerhalb von *a priori* spezifizierten Wertebereichen der definierten Nachrichten liegen, und wobei im *Energielenkungssystem* ein Schalter vorhanden ist, mit dem die Verbindung zum Internet abgeschaltet werden kann.

Ebenso wird diese Aufgabe mit einem eingangs genannten Verfahren dadurch gelöst, dass vom Energieoptimierungssystem periodisch eine definierte zeitgesteuerte Nachricht mit den Soll-Daten der Energieverteilung in der folgenden Periode an das Energielenkungssystem gesendet wird, und wobei vom Energielenkungssystem periodisch eine definierte zeitgesteuerte Nachricht mit den Ist-Daten des Energieeinsatzes in der vergangenen Periode an das Energieoptimierungssystem gesendet wird, und wobei im Energielenkungssystem ein Notfallplan mit Soll-Daten zur Energieverteilung vorhanden ist, der vom Energielenkungssystem verwendet wird, falls in einem festgelegten Zeitintervall keine definierte Nachricht mit Soll-Daten zur Energieverteilung vom Energieoptimierungssystem beim Energielenkungssystem eintrifft, oder wenn die empfangenen Werte der Soll-Daten nicht innerhalb von a priori spezifizierten Wertebereichen der definierten Nachrichten liegen, und wobei im Energielenkungssystem ein Schalter vorhanden ist, mit dem die Verbindung zum Internet abgeschaltet werden kann.

Es werden somit vom *Energieoptimierungssystem* in einer betrachteten Periode Soll-Daten, die in der auf diese betrachtete Periode folgenden Periode verwendet werden sollen, an das *Energielenkungssystem* gesendet.

Weiters werden somit vom *Energielenkungssystem* in einer betrachteten Periode Ist-Daten des Energieeinsatzes in der auf die betrachtete Periode vergangenen Periode an das *Energieoptimierungssystem* gesendet wird.

Das Ziel der Erfindung wird also dadurch erreicht, dass das Energiemanagementsystem beim Endverbraucher in mindestens zwei Subsysteme unterteilt wird. Das erste, vorzugsweise hochzuverlässige, Subsystem mit einer vorzugsweise einfachen Software und im normalen Betrieb ohne einen aktiven Internetanschluss -das Energielenkungssystem- führt die Energielenkung durch. Das zweite Subsystem mit vorzugsweise komplexer Software und einem Internetanschluss - das Energieoptimierungssystem- errechnet den zum jeweiligen Zeitpunkt optimalen Energieeinsatz. Die Übergabe der Soll-Daten und der Ist-Daten des Energieeinsatzes erfolgt durch die Übertragung von definierten Nachrichten zwischen diesen beiden Subsystemen. Eine Nachricht ist definiert, wenn ihre Struktur und die erlaubten Wertebereiche der Daten a priori spezifiziert sind.

Erfindungsgemäß sind beide Subsysteme Fault-Containment Units (FCU). Eine Fault-Containment Unit (FCU) ist ein abgeschlossenes Computer System bestehend aus Hardware und Software, das mit seiner Umgebung über definierte Nachrichten kommuniziert. Ein interner Fehler einer FCU, unabhängig davon ob er durch einen vorübergehenden oder bleibenden Hardwareausfall, durch einen Entwurfsfehler in der Software oder eine Intrusion verursacht wird, führt in den meisten Fällen zu einem Ausfall einer erwarteten Nachricht und in einigen wenigen Fällen zur Übermittlung einer Nachricht, die nicht plausible Daten enthält.

Aus der Sicht der Zuverlässigkeit stellt jede aktive Internetverbindung ein nicht zu unterschätzendes Risiko dar, da über eine solche aktive Internetverbindung eine Intrusion stattfinden kann. Mit aufwendigen intrusion-detection Algorithmen kann dieses Risiko reduziert, jedoch nicht ganz ausgeschaltet werden. Über die definierten Nachrichten, die über die Schnittstelle zwischen dem Energieoptimierungssystem und dem Energielenkungssystem gesendet werden, kann keine Intrusion in das Energielenkungssystem stattfinden. Erfindungsgemäß kann eine vorhandene Internetverbindung des Energielenkungssystems, die für Wartungszwecke benötigt wird, durch einen Schalter am Energielenkungssystem deaktiviert werden, so dass im Normalbetrieb keine Intrusion in das Energielenkungssystem über das Internet stattfinden kann.

Ein zeitgesteuertes Kommunikationssystem erkennt den Ausfall einer Nachricht innerhalb einer minimalen Fehlererkennungslatenz. Durch eine Plausibilitätsüberprüfung der empfangenen Daten beim Empfänger können fehlerhafte Daten erkannt werden. Erfindungsgemäß greift das zuverlässige Energielenkungssystem nach Ausfall einer Nachricht oder dem Empfang von fehlerhaften Daten auf einen statischen Notlaufplan zu, der im Energielenkungssystem vorhanden ist. Auf diese Weise wird die Energieversorgung beim Endverbraucher auch im Fall eines Fehlers oder eines Einbruchs (Intrusion) in das Energieoptimierungssystems aufrechterhalten.

Vorteilhafte Ausgestaltungen des erfindungsgemäßen Systems und Verfahrens sind in den abhängigen Ansprüchen erläutert.

Es kann zweckmäßig sein, wenn die zeitgesteuerten Nachrichten, die zwischen den Subsystemen ausgetauscht werden, die Daten von mindestens drei aufeinanderfolgenden Perioden enthalten.

Von Vorteil kann es sein, wenn der Datenverkehr zwischen dem *Energielenkungssystem* und dem *Energieoptimierungssystem* über einen leitungsgebundenen oder drahtlosen Kommunikationskanal abgewickelt wird.

Es kann zweckmäßig sein, dass der Datenverkehr auf der Schnittstelle zwischen dem *Energielenkungssystem* und dem *Energieoptimierungssystem* von einem unabhängigen Monitor beobachtet wird, wobei diese Beobachtung den Ablauf und das Zeitverhalten des Datenverkehrs zwischen dem *Energielenkungssystem* und dem *Energieoptimierungssystem* nicht beeinflusst.

Weiters kann es von Vorteil sein, wenn das *Energieoptimierungssystem* eine direkte oder indirekte Mensch/Maschine Schnittstelle bedient, über die der Energieverbrauch abgefragt werden kann und auf der, falls in einem festgelegten Zeitintervall keine Nachricht mit den Ist-Daten des Energieeinsatzes vom *Energielenkungssystem* beim *Energieoptimierungssystem* eintrifft, vom *Energieoptimierungssystem* eine Alarmnachricht an die Mensch/Maschine Schnittstelle gesendet wird.

Günstig kann es sein, wenn das *Energieoptimierungssystem* den Energieverbrauch von einem oder mehreren Geräten bei einem Endverbraucher steuert.

Schließlich kann es noch von Vorteil sein, wenn das *Energieoptimierungssystem* über einen Internetanschluss und über *intrusion detection* Algorithmen verfügt.

### Erklärung von verwendeten Begriffen

Im Folgenden wird die angenommene Bedeutung von wichtigen Begriffen, die in der Beschreibung verwendet werden, dargelegt.

**Energielenkungssystem:** Eine Fault-Containment Unit die im Normalbetrieb die Energieverteilung entsprechend den vom Energieoptimierungssystem empfangenen Soll-Daten durchführt. Ein Energielenkungssystem entspricht im Wesentlichen einem handelsüblichen PV-Wechselrichter mit dem entscheidenden Unterschied, dass ein eventuell vorhandener Internetanschluss im Normalbetrieb durch einen Schalter deaktiviert werden kann.

**Energieoptimierungssystem:** Eine Fault-Containment Unit, die über einen Internetanschluss verfügt und unter den gegebenen Marktbedingungen, dem vorhergesagten Wetterbedingungen und dem geplanten Energieverbrauch beim Endverbraucher den optimalen Einsatz der Energie errechnet und die entsprechenden Soll-Daten über eine definierte Datenschnittstelle periodisch an das Energielenkungssystem sendet.

**Fault-Containment** Unit: Ein abgekapseltes Computersystem bestehend aus Hardware und Software, das mit seiner Umgebung definierte Nachrichten austauscht.

**Fehlererkennungslatenz:** Das Zeitintervall zwischen dem Auftreten eines Fehlers und dem Erkennen eines Fehlers.

**Fehlerfall:** Ausfall der Kommunikation zwischen dem Energieoptimierungssystem und dem Energielenkungssystem.

**Ist-Daten:** Die Daten über den stattgefundenen Energieeinsatz in einer spezifizierten Periode.

**Intrusion:** Ein Einbruch (erfolgreicher Hackerangriff) in ein Computersystem.

**intrusion-detection Algorithmus:** Ein Algorithmus, mit dem eine Intrusion erkannt werden kann.

**Normalbetrieb:** Ein Zustand, während dem das Energielenkungssystem, das Energieoptimierungssystem und die Datenübertragung zwischen diesen Systemen spezifikationsgemäß funktionieren.

**Notlaufplan:** Eine Datenstruktur im Energielenkungssystems, die angibt, wie die Energieverteilung im Energielenkungssystem abgewickelt werden soll, wenn keine plausiblen Soll-Daten vom Energieoptimierungssystem empfangen werden.

**Plausible Daten:** Daten, die innerhalb der erlaubten Wertebereiche einer definierten Nachricht liegen. Daten, die nicht innerhalb der erlaubten Wertebereiche einer definierten Nachricht liegen, sind fehlerhaft.

**Signalleitung:** leitungsgebundener oder drahtloser Kanal zur Übertragung von Daten.

**Steuerungssignal:** Ein Signal zur Steuerung eines Geräts.

**Soll-Daten:** Daten, die die Energielenkung in einer spezifizierten Periode vorgeben.

**Stromleitung:** Leitung zur Übertragung elektrischer Energie.

**definierte Nachricht:** Eine Nachricht, in der die Struktur und die erlaubten Wertebereiche der Daten a priori spezifiziert sind.

**definierte zeitgesteuerte Nachricht:** Eine definierte Nachricht, deren periodische Empfangszeitpunkte spezifiziert sind.

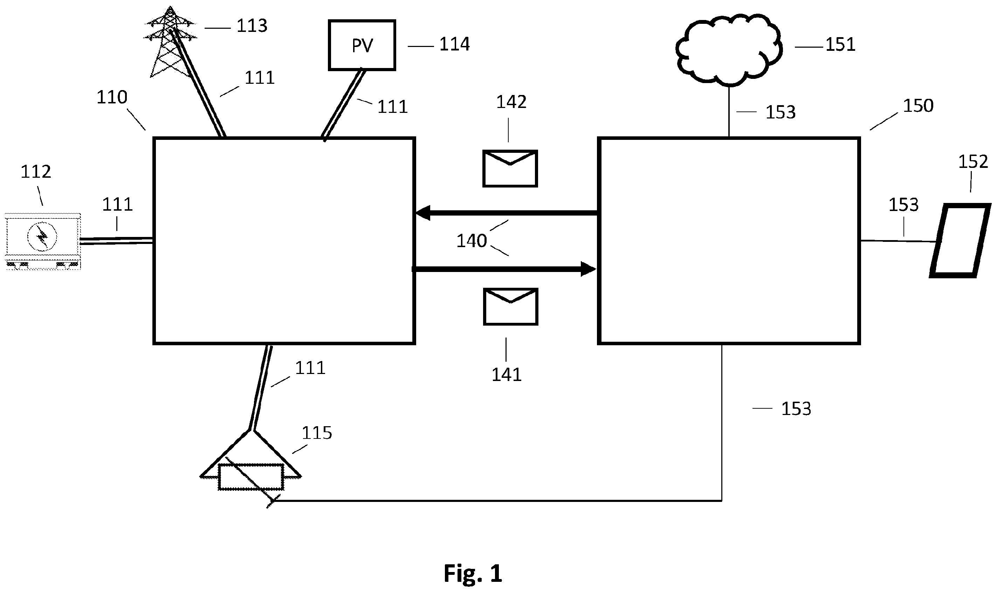

Im Folgenden ist die Erfindung an Hand der einzigen Figur 1 näher erörtert.

Figur 1 zeigt eine mögliche Realisierung eines Energie-Management-System bei einem Energieendverbraucher. Die gezeigte und beschriebene konkrete Realisierung stellt nur eine von vielen Realisierungsmöglichkeiten der Erfindung dar.

Fig. 1 zeigt in der Mitte links ein *Energielenkungssystem* **110,** das über den drahtlosen oder leitungsgebundenen Kommunikationskanal **140** mit dem *Energieoptimierungssystem* **150** in der Mitte rechts der Fig. 1 verbunden ist. Über diesen Kommunikationskanal **140** werden die periodisch *definierten Nachrichten* mit den *Ist-Daten* **141** und den *Soll-Daten* **142** übertragen. Um den transienten Ausfall von zwei aufeinanderfolgenden Nachrichten tolerieren zu können, beinhaltet die Nachricht **141** die *Ist-Daten* von mindestens drei der vergangenen Perioden und die Nachricht **142** die *Soll-Daten* für mindestens drei der folgenden Perioden.

Erfindungsgemäß können die *Ist-Daten* **141** und *Soll-Daten **142*** auf dem Kommunikationskanal **140** von einem unabhängigen Monitor beobachtet werden, ohne den Ablauf und das Zeitverhalten des Datenverkehrs zwischen dem *Energielenkungssystem* **110** und dem *Energieoptimierungssystem* **150** zu beeinflussen.

Vom Energielenkungssystem **110** führen die Stromleitungen **111,** auf denen elektrische Energie übertragen werden kann, zu einer Batterie **112,** zum öffentlichen elektrischen Netz **113,** zu einer Photovoltaik (PV) Anlage **114** und zu den Endverbrauchern **115.** Die gewünschte Leistung der Endverbraucher **115** kann über die drahtlose oder leitungsgebundene Signalleitung **153** vom Energieoptimierungssystem **150** dynamisch festgelegt werden. Am Energielenkungssystem **110** befindet sich der Schalter **116,** mit dem die Internetverbindung im Normalbetrieb deaktiviert werden kann.

Vom Energieoptimierungssystem **150** führen drahtlose oder leitungsgebundene Signalleitungen **153,** auf denen Nachrichten übertragen werden können, zu der Cloud **151,** in der die langfristige Speicherung der Daten erfolgt, zu einer Mensch/Maschine Schnittstelle **152** und zu den Endverbrauchern **115.**

Die Mensch/Maschine Schnittstelle **152** kann über ein mobiles Telefon hergestellt werden. Über die Mensch/Maschine Schnittstelle **152** können der Energieverbrauch abgefragt und die geplante Energieleistungen der Endverbraucher festgelegt werden. Falls in einem festgelegten Zeitintervall keine Nachricht mit den Ist-Daten des Energieeinsatzes vom *Energielenkungssystem **110*** beim *Energieoptimierungssystem* **150** eintrifft, wird vom *Energieoptimierungssystem* **150** eine Alarmnachricht an die Mensch/Maschinen Schnittstelle gesendet.

Im Normalbetrieb holt sich das Energieoptimierungssystem **150** über die Signalleitung **153** die aktuellen Wetterdaten und die Preisdaten der Netz-Energie und bekommt vom Benutzer über die Mensch/Maschinen Schnittstelle **152** den gewünschten Energieeinsatz. Über den Kommunikationskanal **140** werden die Ist-Daten **141** der Energieerzeugung und des Energieeinsatzes in der vergangenen Periode vom Energielenkungssystem **110** geliefert. Aus all diesen Daten errechnet das Energieoptimierungssystem **150** den optimalen Energieeinsatz in der folgenden Periode und sendet diese Soll-Daten **142** an das Energielenkungssystem **110,** das die spezifizierte Energieverteilung vornimmt.

Um eine versuchte Intrusion in das *Energieoptimierungssystem **150*** erkennen und abwehren zu können, enthält das *Energieoptimierungssystem **150** intrusion-detection* Algorithmen.

Ein Fehlerfall liegt vor, wenn das *Energieoptimierungssystem **150*** oder der Kommunikationskanal **140** zwischen dem *Energielenkungssystem **110*** und dem *Energieoptimierungssystem **150*** ausgefallen ist oder wenn das *Energielenkungssystem **110*** Nachrichten **142** mit Werten, die außerhalb der spezifizierten Wertebereiche der definierten Nachrichten liegen, empfängt. In diesem Fall übernimmt das *Energielenkungssystem **110*** die Soll-Daten aus einem Notlaufplan des *Energielenkungssystems* **110** und steuert den Energiefluss entsprechend diesem Notlaufplan.

## Patentansprüche

1. Energie-Management-System bei einem Energieendverbraucher, wobei das Energie-Management System aus mindestens zwei Subsystemen, einem *Energielenkungssystem (110)* und einem *Energieoptimierungssystem* (150) besteht, wobei
das *Energielenkungssystem (110)* über Stromleitungen (111) mit mindestens einer Energiequelle (112, 113, 114) und mindestens einem Energieverbraucher (115) verbunden ist, und vorzugsweise an einem oder mehreren Energiespeichern (112) angeschlossen ist, und eine zeitabhängige Verteilung der elektrischen Energie im *Normalbetrieb* entsprechend *Soll-Daten* (142) vom *Energieoptimierungssystem* (150) vornimmt,
und wobei das *Energieoptimierungssystem* (150) über Algorithmen verfügt, mittels derer die zeitabhängigen Soll-Daten (142) für die Verteilung der elektrischen Energie auf der Basis des geplanten Energieverbrauchs und der vom Internet geladenen Energiepreis- und Wetterdaten berechnet werden,
**dadurch gekennzeichnet, dass**
das *Energielenkungssystem (110)* und das *Energieoptimierungssystem* (150) je eine unabhängige *Fault Containment Unit* bilden, und wobei
eine Schnittstelle zwischen dem *Energielenkungssystem* (110) und dem *Energieoptimierungssystem* (150) als
zeitgesteuerte Nachrichtenschnittstelle ausgebildet ist, und wobei vom *Energieoptimierungssystem* (150) periodisch eine *definierte zeitgesteuerte Nachricht* mit *Soll-Daten* der Energieverteilung an das *Energielenkungssystem (110)* gesendet wird, wobei in einer betrachteten Periode Soll-Daten, die in der auf diese betrachtete Periode folgenden Periode verwendet werden sollen, gesendet werden,
und wobei vom *Energielenkungssystem* (110) periodisch eine *definierte zeitgesteuerte Nachricht* mit *Ist-Daten (141)* des Energieeinsatzes an das *Energieoptimierungssystem* (150) gesendet wird, wobei in einer betrachteten Periode Ist-Daten des Energieeinsatzes in der auf diese betrachtete Periode vergangenen Periode gesendet werden,
und *wobei*
*im Energielenkungssystem (110)* ein Notfallplan mit Soll-Daten zur Energieverteilung vorhanden ist, der vom *Energielenkungssystem* (110) verwendet wird, falls in einem festgelegten Zeitintervall keine definierte Nachricht mit Soll-Daten zur Energieverteilung vom *Energieoptimierungssystem* (150) beim *Energielenkungssystem* (110) eintrifft, oder wenn die empfangenen Werte der Soll-Daten nicht innerhalb von *a priori* spezifizierten Wertebereichen der definierten Nachrichten liegen, und wobei im *Energielenkungssystem (110)* ein Schalter (116) vorhanden ist, mit dem die Verbindung zum Internet abgeschaltet werden kann.

2. Energie-Management System nach Anspruch 1, **wobei** die zeitgesteuerten Nachrichten, die zwischen den Subsystemen (110, 150) ausgetauscht werden, die Daten von mindestens drei aufeinanderfolgenden Perioden enthalten.

3. Energie-Management System nach einem der vorhergehenden Ansprüche, **wobei** der Datenverkehr zwischen dem *Energielenkungssystem (110)* und dem *Energieoptimierungssystem* (150) über einen leitungsgebundenen oder drahtlosen Kommunikationskanal (140) abgewickelt wird.

4. Energie-Management System nach einem der vorhergehenden Ansprüche, **wobei** der Datenverkehr auf der Schnittstelle zwischen dem *Energielenkungssystem* und dem *Energieoptimierungssystem* von einem unabhängigen Monitor beobachtet wird, wobei diese Beobachtung den Ablauf und das Zeitverhalten des Datenverkehrs zwischen dem *Energielenkungssystem* und dem *Energieoptimierungssystem* nicht beeinflusst.

5. Energie-Management System nach einem der vorhergehenden Ansprüche, **wobei** das *Energieoptimierungssystem* eine direkte oder indirekte Mensch/Maschine Schnittstelle (152) bedient, über die der Energieverbrauch abgefragt werden kann und auf der, falls in einem festgelegten Zeitintervall keine Nachricht mit den Ist-Daten des Energieeinsatzes vom *Energielenkungssystem* beim *Energieoptimierungssystem* eintrifft, vom *Energieoptimierungssystem* eine Alarmnachricht an die Mensch/Maschine Schnittstelle gesendet wird.

6. Energie-Management System nach einem der vorhergehenden Ansprüche, **wobei** das *Energieoptimierungssystem* (150) den Energieverbrauch von einem oder mehreren Geräten bei einem Endverbraucher steuert.

7. Energie-Management System nach einem der vorhergehenden Ansprüche, **wobei** das *Energieoptimierungssystem* (150) über einen Internetanschluss (153) und über *intrusion detection* Algorithmen verfügt.

8. Verfahren zum Energie-Management bei einem Endverbraucher mit einem Energie-Management-System nach einem der Ansprüche 1 bis 7, **wobei** vom Energieoptimierungssystem (150) periodisch eine definierte zeitgesteuerte Nachricht mit den Soll-Daten der Energieverteilung in der folgenden Periode an das Energielenkungssystem (110) gesendet wird, und wobei vom Energielenkungssystem (110) periodisch eine definierte zeitgesteuerte Nachricht mit den Ist-Daten des
Energieeinsatzes in der vergangenen Periode an das Energieoptimierungssystem (150) gesendet wird, und
wobei
im Energielenkungssystem (110) ein Notfallplan mit Soll-Daten zur Energieverteilung vorhanden ist, der vom Energielenkungssystem (110) verwendet wird, falls in einem festgelegten Zeitintervall keine definierte Nachricht mit Soll-Daten zur Energieverteilung vom Energieoptimierungssystem (150) beim
Energielenkungssystem (110) eintrifft, oder wenn die empfangenen Werte der Soll-Daten nicht innerhalb von a priori spezifizierten Wertebereichen der definierten Nachrichten liegen, und wobei im Energielenkungssystem ein Schalter vorhanden ist, mit dem die Verbindung zum Internet abgeschaltet werden kann.

9. Verfahren nach Anspruch 8, **wobei** die zeitgesteuerten Nachrichten, die zwischen den Subsystemen ausgetauscht werden, die Daten von mindestens drei aufeinanderfolgenden Perioden enthalten.

10. Verfahren nach Anspruch 8 oder 9, **wobei** der Datenverkehr auf der Schnittstelle zwischen dem *Energielenkungssystem* und dem *Energieoptimierungssystem* von einem unabhängigen Monitor beobachtet wird, wobei diese Beobachtung den Ablauf und das Zeitverhalten des Datenverkehrs zwischen dem *Energielenkungssystem* und dem *Energieoptimierungssystem* nicht beeinflusst.

11. Verfahren nach einem der Ansprüche 8 bis 10, **wobei** das *Energieoptimierungssystem* eine direkte oder indirekte Mensch/Maschine Schnittstelle (152) bedient, über die der Energieverbrauch abgefragt werden kann und auf der, falls in einem festgelegten Zeitintervall keine Nachricht mit den Ist-Daten des Energieeinsatzes vom *Energielenkungssystem* beim *Energieoptimierungssystem* eintrifft, vom *Energieoptimierungssystem* eine Alarmnachricht an die Mensch/Maschine Schnittstelle gesendet wird.

12. Verfahren nach einem der Ansprüche 8 bis 11, **wobei** das *Energieoptimierungssystem* den Energieverbrauch von einem oder mehreren Geräten bei einem Endverbraucher (115) steuert.

## Claims

1. Energy management system for an end-user of energy, wherein the energy management system comprises at least two subsystems, an energy control system (110) and an energy optimization system (150), wherein
the energy control system (110) is connected via power lines (111) to at least one energy source (112, 113, 114) and at least one energy consumer (115), and is preferably connected to one or more energy storage devices (112), and performs a time-dependent distribution of electrical energy during normal operation in accordance with target data (142) from the energy optimization system (150),
and wherein the energy optimization system (150) employs algorithms by means of which the time-dependent target data (142) for the distribution of electrical energy are calculated based on the planned energy consumption and the energy price and weather data downloaded from the Internet,
**characterized in that**
the energy control system (110) and the energy optimization system (150) each form an independent fault containment unit, and wherein
an interface between the energy control system (110) and the energy optimization system (150) is configured as a time-controlled message interface, and wherein
the energy optimization system (150) periodically sends a defined time-controlled message containing target data for energy distribution to the energy control system (110), wherein, in a given period, target data intended for use in the period following this given period is sent,
and wherein the energy management system (110) periodically sends a defined time-controlled message containing actual data (141) on energy usage to the energy optimization system (150), wherein, in a given period, actual data on energy usage from the period preceding this given period is sent,
and wherein
the energy management system (110) maintains a contingency plan containing target data for energy distribution, which is used by the energy management system (110) if a defined message containing target data for energy distribution from the energy optimization system (150) is received by the energy control system (110), or if the received values of the target data do not fall within a priori specified value ranges of the defined messages, and wherein
the energy control system (110) includes a switch (116) with which the connection to the Internet can be disconnected.

2. Energy management system according to claim 1, wherein the time-controlled messages exchanged between the subsystems (110, 150) contain data from at least three consecutive periods.

3. Energy management system according to any one of the preceding claims, wherein data traffic between the energy control system (110) and the energy optimization system (150) is handled via a wired or wireless communication channel (140).

4. Energy management system according to any of the preceding claims, wherein the data traffic on the interface between the energy control system and the energy optimization system is monitored by an independent monitor, and wherein this monitoring does not affect the flow or timing of the data traffic between the energy control system and the energy optimization system.

5. Energy management system according to any of the preceding claims, wherein the energy optimization system operates a direct or indirect human-machine interface (152), through which energy consumption can be queried and on which, if no message containing the actual energy usage data from the energy control system arrives at the energy optimization system within a specified time interval, the energy optimization system sends an alarm message to the human-machine interface.

6. Energy management system according to any of the preceding claims, wherein the energy optimization system (150) controls the energy consumption of one or more devices at an end user.

7. Energy management system according to any of the preceding claims, wherein the energy optimization system (150) has an Internet connection (153) and intrusion detection algorithms.

8. Method for energy management at an end user with an energy management system according to any one of claims 1 through 7, wherein the energy optimization system (150) periodically sends a defined time-controlled message containing the target data for energy distribution in the following period to the energy control system (110), and wherein the energy control system (110) periodically sends a defined time-controlled message containing the actual data on energy consumption in the previous period to the energy optimization system (150), and wherein
the energy control system (110) maintains an emergency plan containing target data for energy distribution, which is used by the energy control system (110) if no defined message containing target data for energy distribution from the energy optimization system (150) at the energy control system (110), or if the received values of the target data do not fall within a priori specified value ranges of the defined messages, and wherein
a switch is provided in the energy control system with which the connection to the Internet can be disconnected.

9. Method according to claim 8, wherein the time-controlled messages exchanged between the subsystems contain data from at least three consecutive periods.

10. Method according to claim 8 or 9, wherein the data traffic on the interface between the energy management system and the energy optimization system is monitored by an independent monitor, wherein this monitoring does not affect the sequence or timing of the data traffic between the energy management system and the energy optimization system.

11. Method according to any one of claims 8 to 10, wherein the energy optimization system operates a direct or indirect human-machine interface (152), through which energy consumption can be queried and on which, if no message containing the actual energy usage data from the energy management system arrives at the energy optimization system within a specified time interval, the energy optimization system sends an alarm message to the human-machine interface.

12. Method according to any one of claims 8 to 11, wherein the energy optimization system controls the energy consumption of one or more devices at an end user (115).

## Revendications

1. Système de gestion de l'énergie chez un consommateur final d'énergie, le système de gestion de l'énergie étant composé d'au moins deux sous-systèmes, à savoir un système de régulation de l'énergie (110) et un système d'optimisation de l'énergie (150), dans lequel
le système de régulation de l'énergie (110) est relié, par l'intermédiaire de lignes électriques (111), à au moins une source d'énergie (112, 113, 114) et à au moins un consommateur d'énergie (115), et est de préférence raccordé à un ou plusieurs accumulateurs d'énergie (112), et effectue une répartition de l'énergie électrique en fonction du temps en mode de fonctionnement normal conformément à des données de consigne (142) par le système d'optimisation énergétique (150),
et dans lequel le système d'optimisation énergétique (150) dispose d'algorithmes au moyen desquels les données de consigne dépendantes du temps (142) pour la répartition de l'énergie électrique sont calculées sur la base de la consommation d'énergie prévue et des données relatives aux prix de l'énergie et à la météo téléchargées depuis Internet,
**caractérisé en ce que**
le système de gestion de l'énergie (110) et le système d'optimisation de l'énergie (150) forment chacun une unité de confinement des défaillances indépendante, et dans lequel
une interface entre le système de gestion de l'énergie (110) et le système d'optimisation de l'énergie (150) est conçue comme une interface de messages temporisée, et dans lequel
le système d'optimisation énergétique (150) envoie périodiquement au système de gestion de l'énergie (110) un message temporisé défini contenant des données de consigne relatives à la répartition de l'énergie, les données de consigne destinées à être utilisées au cours de la période suivant la période considérée étant envoyées au cours de cette période considérée,
et dans lequel le système de gestion de l'énergie (110) envoie périodiquement un message temporisé défini contenant des données réelles (141) de la consommation d'énergie au système d'optimisation de l'énergie (150), les données réelles de la consommation d'énergie de la période précédant la période considérée étant envoyées au cours de cette période considérée,
et dans lequel
le système de gestion de l'énergie (110) dispose d'un plan d'urgence contenant des données de consigne relatives à la répartition de l'énergie, lequel est utilisé par le système de gestion de l'énergie (110) si, au cours d'un intervalle de temps défini, aucun message défini contenant des données de consigne relatives à la répartition de l'énergie n'est reçu du système d'optimisation de l'énergie (150) ne parvient pas au système de gestion de l'énergie (110) dans un intervalle de temps défini, ou si les valeurs reçues des données de consigne ne se situent pas dans des plages de valeurs spécifiées a priori pour les messages définis, et dans lequel
le système de gestion de l'énergie (110) comprend un commutateur (116) permettant de couper la connexion à Internet.

2. Système de gestion de l'énergie selon la revendication 1, dans lequel les messages temporisés échangés entre les sous-systèmes (110, 150) contiennent les données d'au moins trois périodes consécutives.

3. Système de gestion de l'énergie selon l'une des revendications précédentes, dans lequel le trafic de données entre le système de gestion de l'énergie (110) et le système d'optimisation de l'énergie (150) s'effectue via un canal de communication filaire ou sans fil (140).

4. Système de gestion de l'énergie selon l'une des revendications précédentes, dans lequel le trafic de données sur l'interface entre le système de gestion de l'énergie et le système d'optimisation de l'énergie est surveillé par un moniteur indépendant, cette surveillance n'influençant pas le déroulement ni le comportement temporel du trafic de données entre le système de gestion de l'énergie et le système d'optimisation de l'énergie.

5. Système de gestion de l'énergie selon l'une des revendications précédentes, dans lequel le système d'optimisation de l'énergie exploite une interface homme-machine directe ou indirecte (152), par l'intermédiaire de laquelle la consommation d'énergie peut être consultée et sur laquelle, si aucun message contenant les données réelles de la consommation d'énergie n'est reçu par le système d'optimisation de l'énergie en provenance du système de gestion de l'énergie dans un intervalle de temps défini, un message d'alarme est envoyé par le système d'optimisation de l'énergie à l'interface homme-machine.

6. Système de gestion de l'énergie selon l'une des revendications précédentes, dans lequel le système d'optimisation énergétique (150) contrôle la consommation d'énergie d'un ou de plusieurs appareils chez un consommateur final.

7. Système de gestion de l'énergie selon l'une des revendications précédentes, dans lequel le système d'optimisation de l'énergie (150) dispose d'une connexion Internet (153) et d'algorithmes de détection d'intrusion.

8. Procédé de gestion de l'énergie chez un consommateur final équipé d'un système de gestion de l'énergie selon l'une des revendications 1 à 7, dans lequel le système d'optimisation de l'énergie (150) envoie périodiquement au système de pilotage de l'énergie (110) un message défini et temporisé contenant les données de consigne relatives à la répartition de l'énergie pour la période suivante, et dans lequel le système de gestion de l'énergie (110) envoie périodiquement au système d'optimisation de l'énergie (150) un message défini et temporisé contenant les données réelles de la consommation d'énergie de la période écoulée, et dans lequel
le système de gestion de l'énergie (110) dispose d'un plan d'urgence contenant des données de consigne relatives à la distribution d'énergie, qui est utilisé par le système de gestion de l'énergie (110) si, au cours d'un intervalle de temps défini, aucun message défini contenant des données de consigne relatives à la distribution d'énergie n'est reçu du système d'optimisation de l'énergie (150) ne parvient pas au système de gestion de l'énergie (110) dans un intervalle de temps défini, ou si les valeurs reçues des données de consigne ne se situent pas dans des plages de valeurs spécifiées a priori pour les messages définis, et dans lequel
le système de gestion de l'énergie comporte un commutateur permettant de couper la connexion à Internet.

9. Procédé selon la revendication 8, dans lequel les messages temporisés échangés entre les sous-systèmes contiennent les données d'au moins trois périodes consécutives.

10. Procédé selon la revendication 8 ou 9, dans lequel le trafic de données sur l'interface entre le système de gestion de l'énergie et le système d'optimisation de l'énergie est surveillé par un moniteur indépendant, cette surveillance n'influençant pas le déroulement ni le comportement temporel du trafic de données entre le système de gestion de l'énergie et le système d'optimisation de l'énergie.

11. Procédé selon l'une des revendications 8 à 10, dans lequel le système d'optimisation énergétique utilise une interface homme-machine directe ou indirecte (152), par l'intermédiaire de laquelle la consommation d'énergie peut être consultée et sur laquelle, si aucun message contenant les données réelles de la consommation d'énergie n'est reçu du système de gestion de l'énergie par le système d'optimisation de l'énergie dans un intervalle de temps défini, un message d'alarme est envoyé par le système d'optimisation de l'énergie à l'interface homme-machine.

12. Procédé selon l'une des revendications 8 à 11, dans lequel le système d'optimisation énergétique contrôle la consommation d'énergie d'un ou de plusieurs appareils chez un consommateur final (115).
